(19) **Europäisches Patentamt / European Patent Office / Office européen des brevets**

(11) **EP 2 082 301 B1**

(12) **FASCICULE DE BREVET EUROPEEN**

(45) Date de publication et mention
de la délivrance du brevet:
**13.04.2011 Bulletin 2011/15**

(21) Numéro de dépôt: **07866517.1**

(22) Date de dépôt: **29.10.2007**

(51) Int Cl.:
*G05D 1/02* (2006.01)   *B60W 30/12* (2006.01)

(86) Numéro de dépôt international:
**PCT/FR2007/052275**

(87) Numéro de publication internationale:
**WO 2008/062124 (29.05.2008 Gazette 2008/22)**

(54) **PROCEDE DE LOCALISATION D'UN VEHICULE PAR RAPPORT AUX VOIES DE CIRCULATION, ET VEHICULE ADAPTE**

VERFAHREN ZUM LOKALISIEREN EINES FAHRZEUGS AUF DER STRASSE UND GEEIGNETES FAHRZEUG

METHOD FOR LOCALISING A VEHICLE ON THE ROAD, AND SUITABLE VEHICLE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.11.2006 FR 0655043**

(43) Date de publication de la demande:
**29.07.2009 Bulletin 2009/31**

(73) Titulaire: **Renault S.A.S.**
**92100 Boulogne-Billancourt (FR)**

(72) Inventeurs:
- **CORNOU, Sébastien**
  **91940 Les Ulis (FR)**
- **MOUROT, Yann**
  **91370 Verrieres Le Buisson (FR)**

(56) Documents cités:
**EP-A- 1 598 233**  **EP-A- 1 657 568**
**DE-A1-102004 007 072**  **DE-A1-102004 024 692**
**DE-A1-102004 031 788**  **DE-A1-102004 057 060**
**US-A- 6 038 496**  **US-A1- 2004 061 596**

## Description

La présente invention concerne un procédé de localisation d'un véhicule en circulation par rapport aux voies de circulation, et un véhicule adapté à la mise en oeuvre de ce procédé.

Depuis déjà plusieurs années, on cherche à pouvoir localiser un véhicule en circulation de manière la plus précise et la plus fiable possible par rapport à la voie de circulation dans laquelle il est sensé évoluer, et divers systèmes tendant à répondre à ce souhait ont déjà été proposés. Un but premier est d'améliorer la sécurité en permettant de détecter un franchissement involontaire d'un bord de la voie, afin de transmettre au conducteur un signal d'alerte. On peut aussi envisager d'utiliser un tel système de localisation en combinaison avec un système de correction de trajectoire de type « ESP », pour détecter la place libre sur la voie de circulation, pour adopter la stratégie la mieux adaptée lors de la correction de trajectoire. Une autre application encore peut être d'assurer une assistance au maintien de la trajectoire en adaptant la dureté d'une direction assistée en fonction de la proximité du bord de la voie, le système étant alors débrayable par la mise en action du clignotant par exemple. Une autre application encore peut être de veiller à maintenir une distance latérale de sécurité, en synergie avec des détecteurs de dépassement, pour maximiser la distance entre le véhicule équipé et les véhicules alentours.

On connaît déjà, par les documents US-6449383 ou US-6133824, des systèmes de localisation d'un véhicule en circulation par rapport à la voie de circulation, qui utilisent une caméra orientée pour observer la chaussée à l'avant du véhicule, et une unité de traitement d'image et de calcul pour détecter sur les images obtenues en continu une ou des lignes de repères, classiquement les lignes blanches courantes de délimitation des voies, déterminant la direction et les limites de la voie de circulation. Cette détection peut se faire par divers procédés de traitement d'images, plus ou moins adaptés pour tenir compte de la bonne visibilité des lignes blanches, du profil et des courbures de la route, etc. De manière générale, ces systèmes sont tous dépendant des conditions environnementales et de la qualité de marquage au sol des dites lignes de repères.

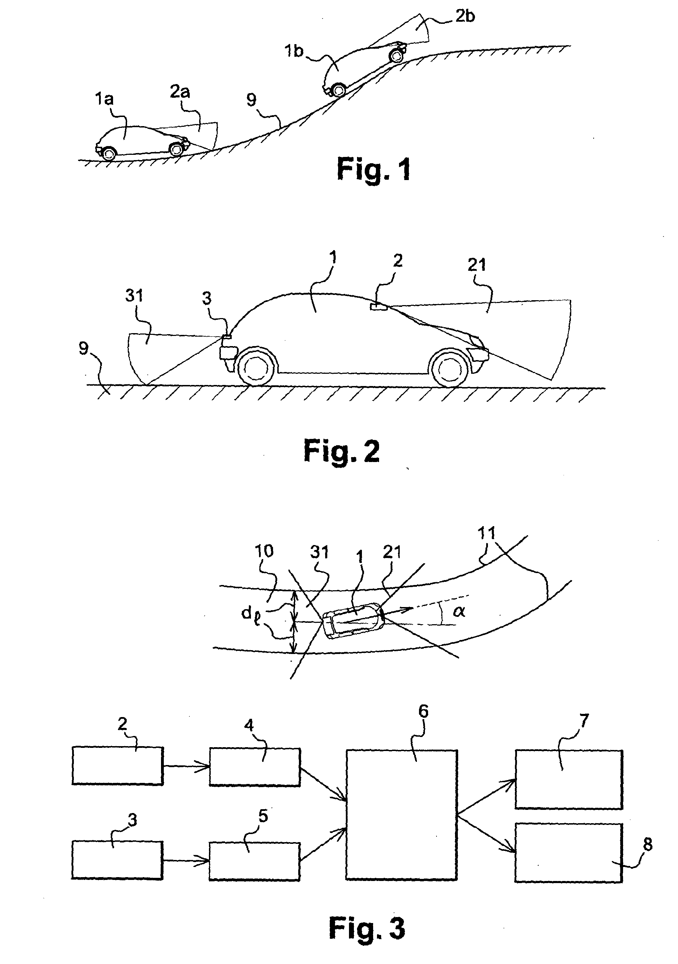

Un exemple des problèmes rencontrés est illustré par le dessin de la figure 1 qui montre un véhicule équipé d'une caméra visant la chaussée en avant du véhicule. Lorsque le véhicule se trouve dans la position 1a, sur route plane ou dans une zone en creux, le champ de vision 2a de la caméra englobe sans difficultés la chaussée 9 et le marquage qu'elle comporte. Par contre, dans une situation telle que représentée en position 1b, typiquement au franchissement d'un haut de colline, le champ de vision 2b de la caméra s'écarte de la chaussée, ou au moins capte beaucoup plus difficilement les marquages, et en conséquence le système de détection ne permet plus de déterminer de manière fiable la position des lignes blanches ou autres repères de la chaussée. Dans une telle situation, il n'y a plus aucune localisation du véhicule par rapport à sa voie de circulation.

Le document FR-2861487 décrit un système destiné à des véhicules équipés d'une caméra de rétrovision placée à l'arrière du véhicule et qui vise donc vers l'arrière, et qui utilise cette caméra pour aussi détecter les lignes blanches. Le but est de réduire les coûts en utilisant une seule caméra pour différentes fonctions, mais les problèmes de fiabilité restent les mêmes, la détection restant dépendante des conditions environnementales.

Le document US-6215392 propose un système de principe différent, utilisant quatre capteurs placés respectivement à l'avant et à l'arrière du véhicule et de chaque côté de celui-ci, qui détectent un rapprochement ou un éloignement par rapport à une ligne de référence centrale dans la voie de circulation. Un tel système est plutôt un système de type filoguidé, et n'est pas adapté pour la détection de position d'un véhicule sur une voie de circulation d'une chaussée courante.

Par ailleurs, on connaît aussi, par le document US-6360170, un système de détection de présence et de localisation d'un véhicule tiers par rapport à un premier véhicule équipé dudit système. Une caméra arrière est destinée à détecter la présence du véhicule tiers, en cours de dépassement ou s'apprêtant à dépasser. Cette caméra permet de détecter le véhicule tiers et de le localiser approximativement par rapport au premier véhicule, mais ne peut pas, notamment par exemple en cas d'un éclairage insuffisant vers l'arrière du véhicule, ou d'un éblouissement par le véhicule suiveur, correctement détecter sa situation sur la chaussée. Pour améliorer cela, le système proposé dans ce document utilise une caméra avant qui détecte les lignes blanches à l'avant du premier véhicule et utilise les informations ainsi obtenues pour, en quelque sorte, les reporter sur l'image obtenue de la caméra arrière et s'en servir comme repère de localisation du véhicule tiers. Ce système ne vise donc pas à localiser le premier véhicule sur sa voie de circulation, mais à localiser un véhicule tiers, engageant ou susceptible d'engager une manoeuvre de dépassement.

La présente invention a pour but de résoudre les divers problèmes de fiabilité, de visibilité des lignes dans des conditions de mauvais éclairement, que ce soit par éclairement insuffisant des lignes ou par éblouissement suite à un éclairement excessif de l'environnement, par le soleil face à la caméra ou par les phares d'autres véhicules. Elle vise aussi à résoudre les problèmes de robustesse du système vis-à-vis du traitement des images lorsque les marques observées sont salies, voire localement absentes. Elle vise encore à résoudre les problèmes de pertes de repères dans les virages ou en sommet de côtes, lorsque l'orientation du véhicule, et donc de la caméra, par rapport aux marques de la chaussée fait que les dites marques sortes du champ de vision de la caméra.

Avec ces objectifs en vue, l'invention a pour objet un procédé de localisation d'un véhicule en circulation par rapport aux voies de circulation selon lequel des images de la voie sur laquelle le véhicule est en circulation sont formées en continu ou à intervalles prédéterminés par une caméra portée par le véhicule et orientée vers la dite voie, et un traitement d'image est effectué pour déterminer sur les dites images la position d'au moins un élément de ligne de repère, de manière à en déduire des informations susceptibles d'être représentatives de la position du véhicule par rapport aux voies, caractérisé en ce qu'on utilise une première caméra orientée vers l'avant du véhicule et une deuxième caméra orientée vers l'arrière du véhicule, et on réalise une fusion des informations issues des images fournies par les deux caméras, pour obtenir une information résultante représentative de la position du véhicule par rapport aux voies ou une information d'erreur.

Chaque caméra est associée à un calculateur spécifique, agencé pour localiser sur les images fournies par chaque caméra des éléments de ligne de repère et les informations spécifiques fournies par chaque calculateur spécifique sont transmises à un calculateur principal agencé pour en effectuer la fusion et déterminer la dite information résultante

L'idée de l'invention est donc d'utiliser une caméra avant orientée vers l'avant conjointement avec une caméra arrière orientée vers l'arrière. Le champ de vision de chaque caméra couvre la chaussée respectivement en avant et en arrière du véhicule, ou au moins une portion de la chaussée englobant la voie de circulation du véhicule et les zones avoisinantes. La fusion des données fournies par chacun des systèmes composé d'une caméra et de son calculateur associé permet d'augmenter sensiblement la robustesse de la détection des lignes, notamment des lignes blanches délimitant les voies de circulation. L'usage de deux caméras, a fortiori doté de champs de vision différents, accroît fortement la probabilité de détecter les bords de voies dans au moins une des deux images. On notera que l'invention peut également être utilisée en absence de marquage au sol, en détectant alors les bords de la chaussée.

De manière générale, il y a deux modes de fonctionnement possible lors de l'utilisation de l'invention : soit les deux systèmes avant et arrière fonctionnent ensemble, soit un seul des deux systèmes fonctionne, l'autre étant temporairement incapable de fournir des informations de qualité, comme par exemple dans le cas du franchissement de sommet de colline indiqué en début de ce mémoire, ou suite à des mouvements de tangage provoqués par des dos d'âne ou nids de poules. La fusion des données des deux systèmes permet de rendre plus robuste la détection des lignes. En effet, dans les cas particuliers où l'environnement fait qu'un des deux systèmes ne fonctionne pas correctement, il reste l'autre pour fournir une information. Par exemple, au moment de l'entrée dans un tunnel, la caméra avant est éblouie, le système avant correspondant ne peut donc pas fournir d'informations, tandis que le système à l'arrière du véhicule peut encore continuer à fonctionner, et fournir au calculateur principal des informations sur le positionnement du véhicule par rapport au lignes délimitant sa voie. Les éblouissements sont dus à des sources de lumières venant perturber l'enregistrement de l'image du fait de la dynamique limitée des capteurs. En cas d'éblouissement, que ce soit par le soleil ou d'autres sources de lumières, l'usage de deux caméras observant dans des directions différentes et, en particulier, dans des directions opposées, permet d'assurer qu'au moins une des deux caméras ne sera pas éblouie.

Ainsi, selon une disposition particulière de l'invention, chaque calculateur spécifique fournit au calculateur principal une information complémentaire de succès ou d'échec du traitement de l'image, de manière que le calculateur principal puisse déterminer en fonction de ces informations de succès ou d'échec la configuration particulière du système pour effectuer la fusion des données, comme on le verra plus en détail par la suite.

Selon encore une autre disposition particulière, pour déterminer l'information résultante, le calculateur utilise aussi des informations fournies par des équipements de mesure du véhicule, ces informations permettant de fournir au calculateur principal des données complémentaires sur certains paramètres propres au véhicule, par exemple sa vitesse ou son orientation dans l'espace, et ainsi d'affiner les informations déterminées par le calculateur principal.

L'information résultante peut être transmise à des moyens avertisseurs ou actionneurs pour signaler une situation anormale de position du véhicule et/ou corriger automatiquement la trajectoire du véhicule.

L'invention a aussi pour objet un véhicule comportant un système de localisation du véhicule en circulation par rapport aux voies de circulation, caractérisé en ce que, pour la mise en oeuvre du procédé tel que définit ci-dessus, il comporte une première caméra orientée vers l'avant du véhicule et une deuxième caméra orientée vers l'arrière du véhicule, un premier et un second calculateur spécifique agencés respectivement pour localiser sur les images fournies par chaque caméra des éléments de ligne de repère et fournir une information spécifique représentative de cette localisation, et un calculateur principal agencé pour effectuer une fusion des informations spécifiques fournies par chaque calculateur spécifique et déterminer une information résultante représentative de la position latérale et de l'orientation du véhicule par rapport aux voies ou une information d'erreur.

Des moyens de transmission sont par ailleurs prévus pour transmettre l'information résultante à des moyens avertisseurs ou actionneurs pour signaler une situation anormale de position du véhicule et/ou corriger automatiquement la trajectoire du véhicule.

D'autres caractéristiques et avantages apparaîtront dans la description qui va être faite d'un exemple de mise en oeuvre de l'invention.

On se reportera aux dessins annexés dans lesquels :

- la figure 1 illustre un problème de détection que la présente invention résout et qui a déjà été commenté,
- la figure 2 illustre un exemple d'implantation des caméras sur un véhicule conforme à l'invention,
- la figure 3 est un schéma fonctionnel du système de localisation et de traitement des informations selon l'invention,
- la figure 4 illustre la détermination de la position d'un point d'une ligne blanche de la chaussée par la caméra avant du véhicule,
- la figure 5 est une représentation schématique des mesures effectuées respectivement par les caméras avant et arrière,
- la figure 6 est une représentation schématique de deux cas où une seule image est traitée,
- la figure 7 est une représentation de la fonctionnalité de détection des cas particuliers, en absence de tels cas particulier
- la figure 8 est une représentation de la fonctionnalité de détection des cas particuliers, en présence d'un tel cas particulier, constitué ici par une sortie d'autoroute
- la figure 9 illustre la détermination de la discontinuité entre les trajectoires déterminées à partir de chaque caméra, dans le cas d'une sortie d'autoroute comme représenté figure 8.

Un véhicule 1 conforme à l'invention comprend une caméra avant 2 dont le champ de vision 21 est orienté vers l'avant, et une caméra arrière 3 dont le champ de vision 31 est orienté vers l'arrière.

Les images enregistrées par chacune de ces caméras 2, 3 sont transmises à deux calculateurs spécifiques 4, 5 dont la fonction est de localiser les lignes 11 bordant la voie 10 de circulation du véhicule dans les images fournies par les caméras.

Lorsque la position de ces lignes dans les images des caméras, et donc de la voie utilisée par le véhicule, est déterminée par les calculateurs 4 et 5, chacun des calculateurs transmet cette information à un troisième calculateur, ou calculateur principal 6 dont la fonction est d'exploiter les informations provenant de l'avant et de l'arrière afin de déterminer la position latérale $d_1$ et l'orientation $\alpha$ du véhicule par rapport aux bords 11 de sa voie de circulation 10 et de déterminer l'existence ou non d'une situation devant générer une action. Le calculateur principal 6 est par ailleurs relié à des équipements de mesure, non représentés, du véhicule, agencés pour déterminer des paramètres du véhicule tels que sa vitesse ou son orientation dans l'espace et transmettre au calculateur des informations sur les dits paramètres.

On notera que ces trois calculateurs 4, 5, 6 peuvent être regroupés, tout ou partiellement, au sein d'une même unité de calcul.

L'information issue du calculateur principal 6 est mise à disposition des autres systèmes du véhicule, par exemple par le biais du réseau interne au véhicule de type « CAN ». L'information peut ainsi être transmise à des actionneurs tels q'une alarme 7 sonore ou tactile par vibration. L'information peut aussi être employé par un système type ESP 8 pour optimiser le contrôle de trajectoire en définissant les corrections les plus à même de conserver le véhicule dans sa voie de circulation.

La détection de la voie 10, ou plus exactement des lignes 11 bordant cette voie, dans les images est effectué en utilisant une méthode de détection mono vision telle que, par exemple, celle publiée dans le document « AUFRERE R., CHAPUIS R., CHAUSSE F. - A dynamic vision algorithm to locate a vehicle on a non-structured road - International Journal of Robotics Research, 19, 5, Mai 2000, pp. 411-423 », dont l'enseignement est intégré ici par référence. Ces méthodes fournissent par ailleurs une estimation de la qualité de leur mesure et sont capables de déterminer la non réussite d'une détection par le traitement d'image effectué ; une information booléenne succès/échec complémentaire est donc disponible et peut ainsi être fournie au calculateur principal 6.

En entrée, le calculateur principal 6 reçoit donc :

- une information sur la position de la voie détectée dans l'image avant et une information de succès/échec pour le traitement de l'image avant, en provenance du calculateur 4,
- une information sur la position de la voie détectée dans l'image arrière et une information de succès/échec pour le traitement de l'image arrière, en provenance du calculateur 5,
- la vitesse du véhicule et, si disponible, les variations d'orientation de celui-ci, provenant des systèmes embarqués propres au véhicule.

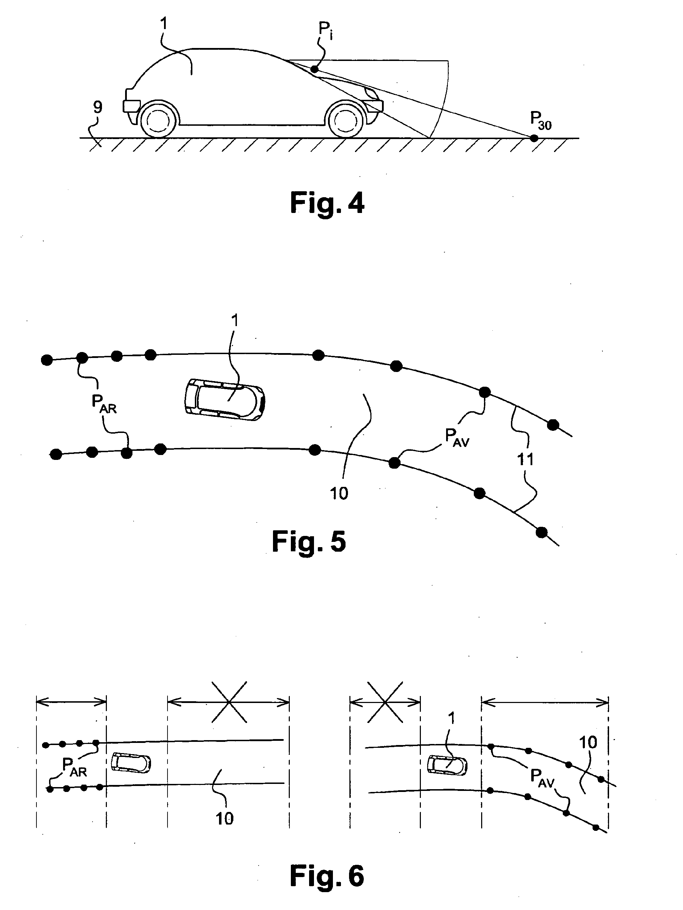

Comme l'illustre la figure 4, le calculateur peut ainsi déterminer, à partir des points images $P_i$ provenant des caméras, la position dans l'espace des points $P_{3d}$ correspondant, du fait que la position, l'orientation, et les paramètres des caméras sont définis par rapport à la voiture 1 et donc par rapport aux points de contact des roues avec le sol de la chaussée 9.

Le calculateur peut donc reconstituer, comme l'illustre la figure 5, à partir de la position calculée des points $P_{AR}$, $P_{AV}$ représentant les bords 11 de la voie de circulation 10, le profil de cette voie, et la position relative du véhicule par rapport à la voie. Sur la figure 5, les points $P_{AR}$ sont les points déterminés à partir du traitement des images fournies par la caméra arrière 3, et les points $P_{AV}$ sont les points déterminés à partir du traitement des images fournies par la caméra avant 2.

En pratique, les données fournies par les calculateurs spécifiques 4, 5 sont traitées différemment selon les informations de succès/échec reçues par le calculateur principal 6, c'est-à-dire selon que les images avant et arrière ont été, ou non, traitées avec succès.

A) Dans le cas où les images avant et arrière ont été traitées avec succès, c'est-à-dire si chaque calculateur spécifique 4, 5 fournit une information complémentaire de succès du traitement d'image, le calculateur principal 6 dispose, comme représenté figure 5, de points de mesure aussi bien à l'avant du véhicule qu'à l'arrière de celui-ci. Par rapport à un repère défini sur le véhicule, chaque point de mesure $P_{AV}$, $P_{AR}$ est caractérisé par ses coordonnées dans le plan de la route (X, Y) et par une matrice de covariance $\Omega$ traduisant l'incertitude sur ces positions.

Un modèle mathématique $\zeta_i$ est alors déterminé par le calculateur principal 6 pour représenter le profil de chaque bord 11 de la voie de circulation 10. Ce modèle traduit le rien entre les coordonnées X et Y pour tout point appartenant au bord de la voie. Par exemple cela peut être un polynôme de degré deux de sorte que l'on modélise le bord droit et le bord gauche de la voie par respectivement :

$$\mathtt{gauche} : Y_g = a_g.\dot{X}^2{}_g + b_g$$

$$\mathtt{droite} : Y_d = a_d.X^2{}_d + b_d$$

où les $(X_i, Y_i)$ correspondent aux coordonnées d'un point mesuré appartenant au bord de voie i.

Pour déterminer $\zeta_g$ et $\zeta_d$, on recherche les paramètres des modèles ($\zeta_g$ et $\zeta_d$) qui minimisent les équations $\zeta_i(X)=Y$ pour tout point (X,Y) appartenant au bord de voie considéré. Une fois les modèles $\zeta_g$ et $\zeta_d$ déterminés, on connaît une estimation de la position des bords de voie 11 par rapport au véhicule. Il devient alors simple de calculer la distance de la voie droite et de la voie gauche par rapport à une pluralité de points du véhicule et d'en déduire la position transversale du véhicule par rapport aux dits profils et l'orientation du véhicule par rapport à la voie de circulation.

B) Dans le cas où une seule image sur celles fournies par les deux caméras a été traitée avec succès, on se retrouve dans la situation illustrée par la figure 6, ou le dessin de gauche illustre le cas d'un échec de traitement de l'image fournie par la caméra avant 2, et le dessin de droite illustre le cas d'un échec de traitement de l'image fournie par la caméra arrière 3.

Si un des calculateurs spécifique 4, 5 fournit une information complémentaire d'échec, et si cette information d'échec est fournie dans un temps, compté à partir de la dernière information de succès, inférieur à une durée prédéterminée, par exemple de l'ordre de 2 secondes, le calculateur principal utilise, en remplacement, des informations spécifiques enregistrées précédemment à la dite dernière information de succès, corrigées, en fonction des informations fournies par des équipements de mesure du véhicule, pour évaluer une modification estimée de la position et de l'orientation du véhicule depuis la dernière information de succès ; et si cette information d'échec est fournie dans un temps supérieur à la dite durée prédéterminée, le calculateur principal utilise uniquement les informations fournies par le calculateur ayant fourni une information complémentaire de succès.

En pratique, et en relation avec la figure 6, trois cas sont alors considérés :

- Echec de la caméra arrière (dessin de droite de là figure 6): on ne traite que les points $P_{AV}$ de mesure issus de la caméra avant et l'on applique le même traitement que précédemment

- Echec récent de là caméra avant : si la perte d'information à l'avant est récente, on substitue aux points de mesure attendus les points de mesure enregistrés précédemment, lors du traitement des images précédentes. On leur applique une correction de position correspondant au déplacement supposé, ou mesuré grâce aux capteurs de vitesse et de variation d'orientation du véhicule, de la voiture pendant l'intervalle de temps entre le moment présent et le moment où les derniers points de mesure avant ont été déterminés. Ces points sont alors combinés avec les points déterminés à partir de la caméra arrière.

- Echec ancien de la caméra avant : seuls les points de mesure arrière sont pris en compte et l'on se ramène au cas initial.

C) Dans le cas où le traitement des deux images avant et arrière a mené à un échec, le système renvoie un signal d'échec.

Si chacun des calculateurs spécifique fournit une information complémentaire d'échec, et si au moins une des informations d'échec est fournie dans un temps, compté à partir de la dernière information de succès, inférieur à une durée prédéterminée, le calculateur principal utilise, en remplacement, les informations spécifiques du calculateur ayant fourni l'information d'échec dans le dit temps, compté à partir de la dernière information de succès, inférieur à une durée prédéterminée, ces informations spécifiques ayant été enregistrées précédemment à la dite dernière information de succès, et étant corrigées en fonction des informations fournies par des équipements de mesure du véhicule pour évaluer une modification estimée de la position et de l'orientation du véhicule depuis la dernière information de succès ; et si les deux calculateurs spécifiques fournissent des informations d'échec dans un temps, compté à partir de la dernière information de succès, supérieur à la dite durée prédéterminée, le calculateur principal renvoie un signal d'échec.

En pratique, si la perte d'information à l'avant est récente on substitue aux points de mesure attendus les points de mesure enregistrés précédemment, lors du traitement des images précédentes, et on leur applique une correction de position correspondant au déplacement supposé, ou mesuré grâce aux capteurs de vitesse et de variation d'orientation du véhicule, de la voiture pendant l'intervalle de temps entre le moment présent et le moment ou les derniers points de mesure avant ont été déterminés. Et si la perte d'information à l'avant est ancienne, le système renvoi alors un signal d'échec.

Suite au traitement qui vient d'être détaillé, Le calculateur principal 6 fournit en sortie des données, de position et d'orientation de la voiture 1 par rapport aux bords 11 de la voie, qui sont transférées aux actionneurs ou alarmes prévues à cet effet.

Le système selon l'invention comporte aussi un système de détection des défaillances de mesure et de présence de cas particuliers, tels que par exemple une sortie d'autoroute. La détermination de telles situations particulières est réalisée en effectuant une procédure particulière consistant, à tout instant t, à comparer un premier profil de voie calculé à partir de la détection de position effectuée par la caméra orientée vers l'avant à un instant t-dt et corrigé par une estimation de la trajectoire du véhicule pendant la durée dt au moyen des informations fournies par les équipements de mesure du véhicule, avec un second profil de voie déterminé par la détection de position du véhicule effectuée à l'instant t par la caméra orientée vers l'arrière, et à en déduire que :

- si le dit second profil de voie est proche du premier profil calculé, la situation est une situation de circulation normale,

- si le dit second profil de voie est orienté différemment du premier profil calculé et présente une discontinuité franche avec celui-ci, il y a soit erreur de mesure soit changement de voie.

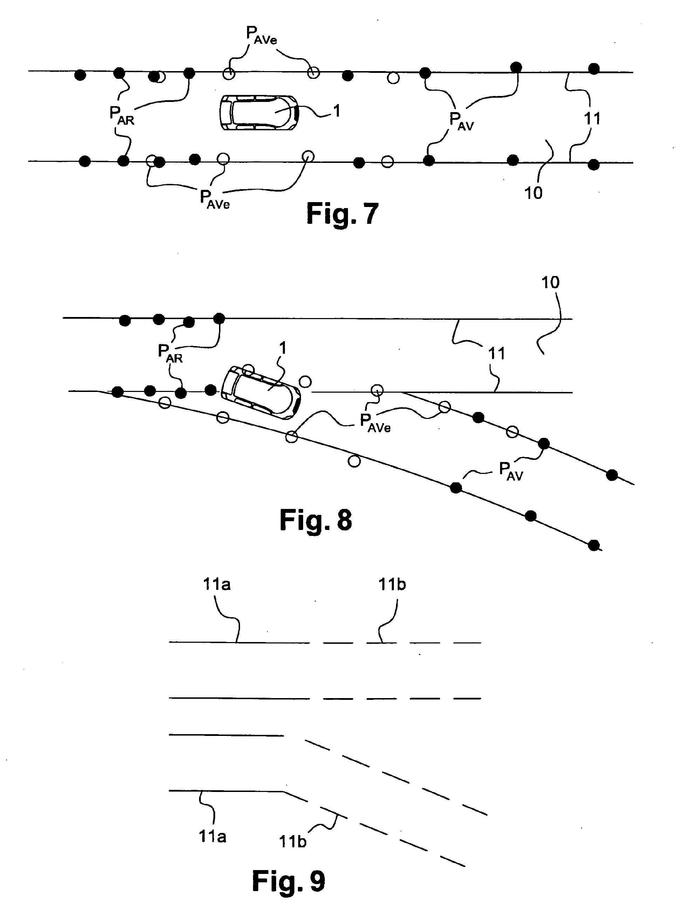

Les figures 7 à 9 illustrent l'exemple d'une voie de décélération lors d'une sortie d'autoroute.

Le principe du système de détection des cas particuliers est de comparer à un instant t, les observations arrière effectué à cet instant t avec les observations avant réalisées précédemment à un instant t-dt. En effet grâce à l'estimation des paramètres du véhicule effectuée en tout instant, on connaît sur une durée dt la trajectoire suivie par le véhicule. Ainsi, il est possible d'estimer la position, par rapport au véhicule et à l'instant t, du bord de voie mesuré par la caméra avant à l'instant t-dt, et représentée sur les figures 7 et 8 par les points blancs $P_{AVe}$. Cette estimation de la position et du profil de la voie peut être comparée à la celle résultant de l'observation faite par la caméra arrière, et représentée par les points noirs $P_{AR}$ situés derrière la voiture. Dans le cas de la figure 7, le véhicule 1 roule le long de sa voie 10. On observe une concordance entre les points PAR détectés par la caméra arrière et les points $P_{AVe}$ estimés à partir de la position du bord de voie mesuré par la caméra avant à l'instant t-dt et propagés au cours du temps comme expliqué ci-dessus. Dans le cas de la figure 8, le véhicule 1 quitte la voie d'autoroute 11 où il circulait pour s'engager sur une bretelle de sortie 20. On observe alors une discordance entre les points $P_{AR}$ détectés par la caméra arrière et les points estimés $P_{AVe}$ détectés par la caméra avant puis propagés au cours du temps. Les profils de route avant et arrière ne correspondent plus.

La figure 9 regroupe comparativement ces deux cas :

- dans le cas de la figure 7, les deux profils 11a, 11b déterminés respectivement par les points $P_{AR}$ $P_{AVe}$ sont proches, comme l'illustre le schéma du haut de la figure 9, et la situation est considérée normale,

- dans le cas de la figure 8, les deux profils 11a, 11b sont orientés différemment, comme l'illustre le schéma du bas de la figure 9, et il s'agit alors soit d'une erreur de mesure soit d'un changement de voie en cours.

L'invention peut également être utilisée en absence de marquage au sol, en détectant alors les bords de la chaussée. Le passage d'un mode de détection de voie proprement dit, par détection des bandes de marquage au sol, à un mode de détection de chaussée, et respectivement, peut être activé soit par un critère basé sur les images vues par les caméras, soit par des informations obtenues par des systèmes GPS.

## Revendications

1. Procédé de localisation d'un véhicule (1) en circulation par rapport aux voies de circulation (10) selon lequel des images de la voie sur laquelle le véhicule est en circulation sont formées en continu ou à intervalles prédéterminés par une caméra portée par le véhicule et orientée vers la dite voie, et un traitement d'image est effectué pour déterminer sur les dites images la position d'au moins un élément de ligne de repère (11), de manière à en déduire des informations susceptibles d'être représentatives de la position du véhicule par rapport aux voies, on utilise une première caméra (2) orientée vers l'avant du véhicule, une deuxième caméra (3) orientée vers l'arrière du véhicule, chaque caméra (2, 3) est associée à un calculateur spécifique (4, 5), agencé pour localiser sur les images fournies par chaque caméra des éléments de ligne de repère (11), les informations spécifiques fournies par chaque calculateur spécifique sont transmises à un calculateur principal (6) agencé pour en effectuer une fusion des informations issues des images fournies par les deux caméras, pour obtenir une information résultante représentative de la position latérale ($d_l$) et de l'orientation ($\alpha$) du véhicule par rapport aux voies ou une information d'erreur **caractérisé en ce que** chaque calculateur spécifique (4, 5) fournit au calculateur principal (6) une information complémentaire de succès ou d'échec du traitement de l'image et **en ce que** les informations spécifiques sont traitées différemment par le calculateur principal (6) selon que les images ont été traitées avec succès ou avec échec.

2. Procédé selon la revendication 1, **caractérisé en ce que**, si chaque calculateur spécifique (4, 5) fournit une information complémentaire de succès du traitement d'image, le calculateur principal (6) détermine des modèles mathématiques ($\zeta_i$) représentant le profil de chaque bord de la voie de circulation et définissant les coordonnées de chaque point du bord de la voie, et détermine la position d'une pluralité de points du véhicule par rapport aux dits profils, pour en déduire la position transversale du véhicule par rapport audits profils et l'orientation du véhicule par rapport à la voie de circulation.

3. Procédé selon la revendication 1, **caractérisé en ce que**, si un des calculateurs spécifiques fournit une information complémentaire d'échec, et si cette information d'échec est fournie dans un temps, compté à partir de la dernière information de succès, inférieur à une durée prédéterminée, le calculateur principal utilise, en remplacement, des informations spécifiques enregistrées précédemment à la dite dernière information de succès, corrigées en fonction des informations fournies par des équipements de mesure du véhicule pour évaluer une modification estimée de la position et de l'orientation du véhicule depuis la dernière information de succès ; et si cette information d'échec est fournie dans un temps supérieur à la dite durée prédéterminée, le calculateur principal utilise uniquement les informations fournies par le calculateur ayant fourni une information complémentaire de succès.

4. Procédé selon la revendication 1, **caractérisé en ce que**, si chacun des calculateurs spécifiques fournit une information complémentaire d'échec, et si au moins une des informations d'échec est fournie dans un temps, compté à partir de la dernière information de succès, inférieur à une durée prédéterminée, le calculateur principal utilise, en remplacement, les informations spécifiques du calculateur ayant fourni l'information d'échec dans le dit temps, compté à partir de la dernière information de succès, inférieur à une durée prédéterminée, ces informations spécifiques ayant été enregistrées précédemment à la dite dernière information de succès, et étant corrigées en fonction des informations fournies par des équipements de mesure du véhicule pour évaluer une modification estimée de la position et de l'orientation du véhicule depuis la dernière information de succès ; et si les deux calculateurs spécifiques fournissent des informations d'échec dans un temps, compté à partir de la dernière information de succès, supérieur à la dite durée prédéterminée, le calculateur principal renvoie un signal d'échec.

5. Procédé selon la revendication 2, **caractérisé en ce que**, à tout instant t, on compare un premier profil de voie (11b) calculé à partir de la détection de position effectuée par la caméra orientée vers l'avant à un instant t-dt et corrigé par une estimation de la trajectoire du véhicule pendant la durée dt au moyen des informations fournies par les équipements de mesure du véhicule, avec un second profil de voie (11a) déterminé par la détection de position du véhicule effectuée à l'instant t par la caméra orientée vers l'arrière, et on en déduit que :

- si le dit second profil de voie est proche du premier profil calculé, la situation est une situation de circulation normale,
- si le dit second profil de voie est orienté différemment du premier profil calculé et présente une discontinuité franche avec celui-ci, il y a soit erreur de mesure soit changement de voie.

6. Véhicule (1) comportant un système de localisation du véhicule en circulation par rapport aux voies de circulation (10), **caractérisé en ce que**, pour la mise en oeuvre du procédé selon l'une des revendications 1 à 5, il comporte une première caméra (2) orientée vers l'avant du véhicule et une deuxième caméra (3) orientée vers l'arrière du véhicule, un premier (4) et un second (5) calculateur spécifique agencés respectivement pour localiser sur les images fournies par chaque caméra des éléments de ligne de repère (11) et fournir une information spécifique représentative de cette localisation, et un calculateur principal (6) agencé pour effectuer une fusion des informations spécifiques fournies par chaque calculateur spécifique et déterminer une information résultante représentative de la position latérale ($d_l$) et de l'orientation ($\alpha$) du véhicule par rapport aux voies ou une information d'erreur.

7. Véhicule selon la revendication 6, **caractérisé en ce que** les calculateurs spécifiques (4, 5) et le calculateur principal (6) sont regroupés dans une même unité de calcul.

8. Véhicule selon la revendication 6, **caractérisé en ce qu'**il comporte des moyens de transmission pour transmettre l'information résultante à des moyens avertisseurs ou actionneurs (7, 8) pour signaler une situation anormale de position du véhicule et/ou corriger automatiquement la trajectoire du véhicule.

9. Véhicule selon la revendication 6, **caractérisé en**

**ce que** le calculateur principal (6) est relié à des équipements de mesure du véhicule agencés pour déterminer des paramètres du véhicule tels que sa vitesse ou son orientation dans l'espace et transmettre au calculateur des informations sur les dits paramètres.

## Claims

1. Method for locating a vehicle (1) travelling relative to the traffic lanes (10), according to which images of the lane on which the vehicle is travelling are formed continuously or at predetermined intervals by a camera carried by the vehicle and pointing towards the said lane, and an image-processing process is carried out in order to determine on the said images the position of at least one line-marking element (11), so as to deduce therefrom items of information capable of being representative of the position of the vehicle relative to the lanes; use is made of a first camera (2) pointing towards the front of the vehicle, a second camera (3) pointing towards the rear of the vehicle, each camera (2, 3) is associated with a specific computer (4, 5) arranged in order to locate, on the images supplied by each camera, line-marking elements (11), the specific items of information supplied by each specific computer are transmitted to a main computer (6) arranged in order to merge the items of information originating from the images supplied by both cameras, in order to obtain a resulting item of information representative of the lateral position ($d_1$) and of the orientation ($\alpha$) of the vehicle relative to the lanes or an item of error information **characterized in that** each specific computer (4, 5) supplies to the main computer (6) an item of additional information concerning the success or failure of the image processing and **in that** the items of specific information are processed differently by the main computer (6) depending on whether the images have been processed with success or with failure.

2. Method according to Claim 1, **characterized in that**, if each specific computer (4, 5) supplies an additional item of information concerning the success of the image processing, the main computer (6) determines mathematical models ($\zeta_i$) representing the profile of each traffic-lane edge and defining the coordinates of each point on the lane edge, and determines the position of a plurality of points of the vehicle relative to the said profiles, in order to deduce therefrom the transverse position of the vehicle relative to the said profiles and the orientation of the vehicle relative to the traffic lane.

3. Method according to Claim 1, **characterized in that**, if one of the specific computers supplies an additional item of failure information, and if this item of failure information is supplied after a time, counted from the last item of success information, that is shorter than a predetermined time, the main computer uses, as a replacement, specific items of information recorded prior to the said last item of success information, corrected according to items of information supplied by items of measuring equipment of the vehicle in order to evaluate an estimated modification of the position and of the orientation of the vehicle since the last item of success information; and if this item of failure information is supplied after a time longer than the said predetermined time, the main computer uses only the items of information supplied by the computer having supplied an additional item of success information.

4. Method according to Claim 1, **characterized in that**, if each of the specific computers supplies an additional item of failure information, and if at least one of the items of failure information is supplied after a time, counted from the last item of success information, that is shorter than a predetermined time, the main computer uses, as a replacement, the specific items of information of the computer having supplied the item of failure information after the said time, counted from the last item of success information, that is shorter than a predetermined time, these specific items of information having been recorded prior to the said last item of success information, and being corrected according to items of information supplied by items of measuring equipment of the vehicle in order to evaluate an estimated modification of the position and of the orientation of the vehicle since the last item of success information; and if both specific computers supply items of failure information after a time, counted from the last item of success information, that is longer than the said predetermined time, the main computer returns a failure signal.

5. Method according to Claim 2, **characterized in that**, at any moment t, a first lane profile (11b) computed on the basis of the position detection carried out by the camera pointing towards the front at a moment t-dt and corrected by an estimate of the trajectory of the vehicle during the time dt by means of the items of information supplied by the items of measuring equipment of the vehicle, is compared with a second lane profile (11a) determined by the detection of the position of the vehicle carried out at the moment t by the camera pointing towards the rear, and what is deduced therefrom is that:

   - if the said second lane profile is close to the first computed profile, the situation is a situation of normal travel,
   - if the said second lane profile is oriented differently from the first computed profile and has a clear discontinuity with the latter, there is either a measurement error or a change of lane.

6. Vehicle (1) comprising a system for locating the vehicle travelling relative to the traffic lanes (10), **characterized in that**, for the application of the method according to one of Claims 1 to 5, it comprises a first camera (2) pointing towards the front of the vehicle and a second camera (3) pointing towards the rear of the vehicle, a first specific computer (4) and a second specific computer (5) arranged respectively in order to locate, on the images supplied by each camera, line-marking elements (11) and to supply an item of specific information representative of this location, and a main computer (6) arranged to merge the items of specific information supplied by each specific computer and to determine an item of resulting information representative of the lateral position ($d_1$) and of the orientation ($\alpha$) of the vehicle relative to the lanes or an item of error information.

7. Vehicle according to Claim 6, **characterized in that** the specific computers (4, 5) and the main computer (6) are combined in one and the same computing unit.

8. Vehicle according to Claim 6, **characterized in that** it comprises transmission means for transmitting the item of resulting information to warning or actuating means (7, 8) in order to signal an abnormal situation concerning the position of the vehicle and/or to automatically correct the trajectory of the vehicle.

9. Vehicle according to Claim 6, **characterized in that** the main computer (6) is connected to items of measuring equipment of the vehicle that are arranged in order to determine the parameters of the vehicle such as its speed or its orientation in space and to transmit to the computer items of information concerning the said parameters.

**Patentansprüche**

1. Verfahren zur Lokalisierung eines fahrenden Fahrzeugs (1) bezüglich der Fahrspuren (10), gemäß dem Bilder der Spur, auf der das Fahrzeug fährt, kontinuierlich oder in vorbestimmten Abständen von einer Kamera erzeugt werden, die sich im Fahrzeug befindet und zu der Spur hin ausgerichtet ist, und eine Bildverarbeitung durchgeführt wird, um in den Bildern die Position mindestens eines Bezugslinienelements (11) zu bestimmen, um daraus Informationen abzuleiten, die für die Position des Fahrzeugs bezüglich der Spuren repräsentativ sein können, eine erste, zur Vorderseite des Fahrzeugs ausgerichtete Kamera (2), eine zweite, zur Rückseite des Fahrzeugs ausgerichtete Kamera (3) verwendet werden, jede Kamera (2, 3) einem spezifischen Rechner (4, 5) zugeordnet ist, der eingerichtet ist, um in den von jeder Kamera gelieferten Bildern Bezugslinienelemente (11) zu lokalisieren, die von jedem spezifische Rechner gelieferten spezifischen Informationen an einen Hauptrechner (6) übertragen werden, der eingerichtet ist, um daraus eine Fusion der aus den von den zwei Kameras gelieferten Bildern stammenden Informationen durchzuführen, um eine resultierende Information, die für die seitliche Position ($d_l$) und die Ausrichtung ($\alpha$) des Fahrzeugs bezüglich der Spuren repräsentativ ist, oder eine Fehlerinformation zu erhalten, **dadurch gekennzeichnet, dass** jeder spezifische Rechner (4, 5) dem Hauptrechner (6) eine komplementäre Erfolgs- oder Fehlschlagsinformation der Bildverarbeitung liefert, und dass die spezifischen Informationen vom Hauptrechner (6) unterschiedlich verarbeitet werden, je nachdem, ob die Verarbeitung der Bilder erfolgreich gewesen oder fehlgeschlagen ist.

2. Verfahren nach Anspruch 1, **dadurch gekennzeichnet, dass**, wenn jeder spezifische Rechner (4, 5) eine komplementäre Erfolgsinformation der Bildverarbeitung liefert, der Hauptrechner (6) mathematische Modelle ($\zeta_i$) bestimmt, die das Profil jedes Rands der Fahrspur darstellen und die Koordinaten jedes Punkts des Rands der Spur definieren, und die Position von mehreren Punkten des Fahrzeugs bezüglich der Profile bestimmt, um daraus die Querposition des Fahrzeugs bezüglich der Profile und die Ausrichtung des Fahrzeugs bezüglich der Fahrspur abzuleiten.

3. Verfahren nach Anspruch 1, **dadurch gekennzeichnet, dass**, wenn einer der spezifischen Rechner eine komplementäre Fehlschlagsinformation liefert, und wenn diese Fehlschlagsinformation in einer Zeit geliefert wird, gezählt ab der letzten Erfolgsinformation, die unter einer vorbestimmten Dauer liegt, der Hauptrechner als Ersatz spezifische Informationen verwendet, die vor der letzten Erfolgsinformation gespeichert wurden, korrigiert in Abhängigkeit von den Informationen, die von Messeinrichtungen des Fahrzeugs geliefert werden, um eine geschätzte Veränderung der Position und der Ausrichtung des Fahrzeugs seit der letzten Erfolgsinformation zu ermitteln; und wenn diese Fehlschlagsinformation in einer Zeit geliefert wird, die über der vorbestimmten Dauer liegt, der Hauptrechner nur die Informationen verwendet, die von dem Rechner geliefert werden, der eine komplementäre Erfolgsinformation geliefert hat.

4. Verfahren nach Anspruch 1, **dadurch gekennzeichnet, dass**, wenn jeder der spezifischen Rechner eine komplementäre Fehlschlagsinformation liefert, und wenn mindestens eine der Fehlschlagsinformationen in einer Zeit, gezählt ab der letzten Erfolgsinformation, geliefert wird, die unter einer vorbestimmten Dauer liegt, der Hauptrechner als Ersatz die spezifischen Informationen des Rechners verwendet, der die Fehlschlagsinformation in der Zeit, gezählt ab der letzten Erfolgsinformation, geliefert hat, die unter einer vorbestimmten Dauer liegt, wobei diese spezifischen Informationen vor der letzten Erfolgsinformation gespeichert wurden und in Abhängigkeit von den Informationen korrigiert werden, die von Messeinrichtungen des Fahrzeugs geliefert werden, um eine geschätzte Veränderung der Position und der Ausrichtung des Fahrzeugs seit der letzten Erfolgsinformation zu ermitteln; und wenn die zwei spezifischen Rechner Fehlschlagsinformationen in einer Zeit, gezählt ab der letzten Erfolgsinformation, liefern, die über der vorbestimmten Dauer liegt, der Hauptrechner ein Fehlschlagsignal zurücksendet.

5. Verfahren nach Anspruch 2, **dadurch gekennzeichnet, dass** in jedem Zeitpunkt t ein erstes Spurprofil (11b), das ausgehend von der von der nach vorne gerichteten Kamera in einem Zeitpunkt t-dt durchgeführten Positionserfassung berechnet und durch eine Schätzung der Fahrstrecke des Fahrzeugs während der Dauer dt mittels der von den Messeinrichtungen des Fahrzeugs gelieferten Informationen korrigiert wird, mit einem zweiten Spurprofil (11a) verglichen wird, das durch die Positionserfassung des Fahrzeugs bestimmt wird, die im Zeitpunkt t von der nach hinten gerichteten Kamera durchgeführt wird, und daraus abgeleitet wird, dass:

   - wenn das zweite Spurprofil nahe dem ersten berechneten Profil ist, die Situation eine normale Verkehrssituation ist,
   - wenn das zweite Spurprofil anders ausgerichtet ist als das erste berechnete Profil und eine deutliche Diskontinuität mit diesem aufweist, es entweder einen Messfehler oder einen Spurwechsel gibt.

6. Fahrzeug (1), das ein System zur Lokalisierung des fahrenden Fahrzeugs bezüglich der Fahrspuren (10) aufweist, **dadurch gekennzeichnet, dass** es zur Durchführung des Verfahrens nach einem der Ansprüche 1 bis 5 eine erste, zur Vorderseite des Fahrzeugs gerichtete Kamera (2) und eine zweite, zur Rückseite des Fahrzeugs gerichtete Kamera (3), einen ersten (4) und einen zweiten (5) spezifischen Rechner, die je eingerichtet sind, um in den von jeder Kamera gelieferten Bildern Bezugslinienelemente (11) zu lokalisieren und eine für diese Lokalisation repräsentative spezifische Information zu liefern, und einen Hauptrechner (6) aufweist, um eine Fusion der von jedem spezifischen Rechner gelieferten spezifischen Informationen durchzuführen und eine resultierende Information, die für die seitliche Position ($d_1$) und die Ausrichtung ($\alpha$) des Fahrzeugs bezüglich der Spuren repräsentativ ist, oder eine Fehlerinformation zu bestimmen.

7. Fahrzeug nach Anspruch 6, **dadurch gekennzeichnet, dass** die spezifischen Rechner (4, 5) und der Hauptrechner (6) in einer gleichen Recheneinheit zusammengefasst sind.

8. Fahrzeug nach Anspruch 6, **dadurch gekennzeichnet, dass** es Übertragungseinrichtungen aufweist, um die resultierende Information an Warn- oder Betätigungseinrichtungen (7, 8) zu übertragen, um eine anormale Situation der Position des Fahrzeugs anzuzeigen und/oder die Fahrstrecke des Fahrzeugs automatisch zu korrigieren.

9. Fahrzeug nach Anspruch 6, **dadurch gekennzeichnet, dass** der Hauptrechner (6) mit Messeinrichtungen des Fahrzeugs verbunden ist, die eingerichtet sind, um Parameter des Fahrzeugs, wie seine Geschwindigkeit oder seine räumliche Ausrichtung, zu bestimmen und an den Rechner Informationen über die Parameter zu übertragen.

**Fig. 1**

**Fig. 2**

$d_\ell$   $\alpha$

**Fig. 3**

**Fig. 4**

$P_i$

$P_{30}$

9

1

**Fig. 5**

1

$P_{AR}$

$P_{AV}$

10

11

**Fig. 6**

$P_{AR}$

10

1

10

$P_{AV}$

EP 2 082 301 B1

Fig. 7

Fig. 8

Fig. 9

13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6449383 B
- US 6133824 A
- FR 2861487
- US 6215392 B
- US 6360170 B

**Littérature non-brevet citée dans la description**

- **AUFRERE R. ; CHAPUIS R. ; CHAUSSE F.** A dynamic vision algorithm to locate a vehicle on a non-structured road. *International Journal of Robotics Research,* Mai 2000, vol. 19 (5), 411-423